# EUROPÄISCHE PATENTANMELDUNG

(11) **EP 3 069 810 A1**
(43) Veröffentlichungstag der Anmeldung: **21.09.2016**
(21) Anmeldenummer: 15160124.2
(22) Anmeldetag: 20.03.2015
(51) Int. Cl.: B23K 9/00, B23K 26/24, B21F 33/00, E04C 5/02, E04H 17/16

(54) **DRAHT- UND/ODER STABANORDNUNG AUS ZWEI PARALLELEN DURCH SCHWEIßEN MITEINANDER VERBUNDENEN DRÄHTEN UND/ODER STÄBEN UND VERFAHREN ZUR HERSTELLUNG DER DRAHTANORDNUNG**

(71) Anmelder: Ideal-Werk C. & E. Jungeblodt GmbH & Co.KG, 59557 Lippstadt (DE)
(72) Erfinder: Jungeblodt, Max Cl., 59555 Lippstadt (DE); Sprink, Gregor, 59609 Anröchte (DE)
(74) Vertreter: Graefe, Jörg

(57) **Zusammenfassung**

diese Anmeldung betrifft eine Draht- und/oder Stabanordnung mit zumindest einem ersten Draht oder Stab (1) mit einem ersten Abschnitt und einem zweiten Draht oder Stab (2) mit einem ersten Abschnitt, wobei die ersten Abschnitte parallel zueinander liegen und durch Schweißen miteinander verbunden sind, wobei die ersten Abschnitte des ersten Drahtes oder Stabes (1) und des zweiten Drahtes oder Stabes (2) über die gesamte Länge der ersten Abschnitte über zumindest eine Schweißnaht mit einander verbunden sind, die sich über die gesamte Länge der ersten Abschnitte oder über einen Teil der ersten Abschnitte erstreckt.

## Beschreibung

Die vorliegende Erfindung betrifft eine Draht- und/oder Stabanordnung mit zumindest einem ersten Draht oder Stab mit einem ersten Abschnitt und einem zweiten Draht oder Stab mit einem ersten Abschnitt, wobei die ersten Abschnitte parallel zueinander liegen und durch Schweißen miteinander verbunden sind.

Aus dem Stand der Technik sind verschiedene Anwendungen von Draht- oder Stabgittern bekannt. Draht- oder Stabgitter werden zum Beispiel benutzt um Körbe, Warentische, Regale, Kabeltrassen, Zäune, Werkstückträger, Käfige usw. herzustellen. Dabei kann es immer zu Gestaltungen kommen, bei denen zwei Drahtgitter miteinander verbunden werden müssen. Das ist zum Beispiel bei einem Werkstückträger oder einem Korb der Fall, dessen Korpus aus mehreren Drahtgittern zusammengesetzt werden können. Ein Korb kann ein erstes Drahtgitter als Boden und ein zweites und ein drittes Drahtgitter als Seitenwände haben. Das zweite Drahtgitter und das dritte Drahtgitter können um etwas mehr als 90° nach abgewinkelt sein und jeweils die Hälfte der vorderen Wand und eine Seitenwand des Korpus des Korbs bilden. Die zwei oder mehr Drahtgitter sind an den Stellen, an denen sie sich berühren, aneinander geschweißt. Dazu werden Drähte an den zu verbindenden Seiten der Drahtgitter zumindest abschnittsweise parallel zu einander gelegt und dann an voneinander beabstandeten Punkten verbunden. Das erfolgt derzeit in der Regel durch Widerstandspressschweißen. Dabei werden die parallel zu einander liegenden ersten Abschnitte der Drähte an den Punkten, an denen sie verbunden werden, unter Anwendung einer äußeren Kraft gegeneinander gepresst und gleichzeitig verschweißt. Das führt zur punktuellen Schweißung. Die dabei aufgebrachte punktuelle Kraft in Kombination mit der Schweißung führt zu einem sogenannten Nachsetzen im Bereich der Punkte. Nachsetzen bedeutet, dass durch das Verflüssigen der zu schweißenden Drähte und der gleichzeitigen Kraft die Mitten der Drähte zu einander bewegt werden, während die Mitten der Drähte in den Bereichen, in denen sie nicht geschweißt werden, ihre Position beibehalten oder sogar aufgrund einer Verformung der Drähte aufgrund des Schweißens nach außen wandern. Im Ergebnis erhält man dann wellenartig verformte, an punktuell einander geschweißte Drähte, wobei in den Tälern dieser Wellen die Schweißverbindungen zwischen den Drähten hergestellt sind.

Diese wellenartigen Verformungen der Drahtgitter an Stellen, an denen die Drähte von zwei aneinanderstoßenden Drahtgittern aneinander geschweißt sind, können insbesondere bei Produkten aus Drahtgittern, die der Präsentation dienen oder deren Funktion eine besondere Form erfordert, einen negativen Eindruck hinterlassen. Gewünscht ist daher eine Verbindung zwischen Drahtgittern, die ohne Verformung der äußeren Drähte hergestellt werden kann.

Diese Aufgabe wird erfindungsgemäß dadurch gelöst, dass die ersten Abschnitte des ersten Drahtes oder Stabes und des zweiten Drahtes oder Stabes über die gesamte Länge der ersten Abschnitte über zumindest eine Schweißnaht miteinander verbunden sind, die sich über die gesamte Länge oder über wenigstens einen Teil der ersten Abschnitte erstreckt. Ein punktuelles Nachsetzen kann dann nicht erfolgen. Eine Verformung der Drähte aufgrund des Schweißvorgangs ist dann ausgeschlossen.

Vorzugsweise werden die Drähte oder Stäbe mittels eines Verfahrens aneinander geschweißt, bei dem kein Druck auf die Drähte oder Stäbe ausgeübt wird. Das kann ein Schmelzschweißverfahren sein. Dann können die Darähte oder Stäbe auch nur punktuell verbunden werden. Dadurch dass bei einem Schmelzschweißverfahren kein Druck auf die Drähte oder Stäbe ausgeübt wird, ist dann ein Nachsetzen verhindert. In Frage kommen ein Laserschweißverfahren, ein Plasmaschweißverfahren, ein Lichtbogenschmelzschweißverfahren, ein Schmelzschweißverfahren mit magnetisch bewegtem Lichtbogen, ein Metalllichtbogenschweißverfahren, ein Schutzgasschweißverfahren, ein Lichtstrahlschweißverfahren, ein Elektrodenstrahlschweißverfahren, ein Widerstandsschmelzschweißverfahren oder ein anderes geeignetes Schweißverfahren sein.

Besonders vorteilhaft ist es, wenn sich der ersten Draht oder Stab und der zweite Draht oder Stab nicht nur entlang einer Linie, sondern flächig berühren und sowohl der erste Draht oder Stab als auch der zweite Draht oder Stab also eine Anlagefläche haben, die vor dem Schweißen aneinander gelegt werden können. Dann kann durch das Schweißen eine Verbindung mit einem Querschnitt geschaffen werden, ohne dass mit einer Kraft die Drähte oder Stäbe gegeneinander gepresst werden müssen.

Die Anlageflächen können eben sein. Die Drähte oder Stäbe können insbesondere ein äußeres Querschnittprofil haben, das ein Kreisprofil ist, von welchen an einer Seite ein Kreissegment abgeschnitten ist.

Die Anlageflächen können aber auch gekrümmt oder abgewinkelt sein, so dass zwischen den Drähte und/oder Stäben über die Anlageflächen ein Formschluss hergestellt werden kann. Vorzugsweise sind die Krümmungen und/oder Abwinkelungen der Anlageflächen der Drähte und/oder Stäbe komplementär zu einander.

Eine erfindungsgemäße Anordnung kann auch drei Drähte und/oder Stäbe umfassen, die erste Abschnitte aufweisen, die parallel zueinander verlaufen und die über ihre gesamte Länge aneinander geschweißt sind. Von diesen drei Drähten und/oder Stäben kann einer als Verbindungsstück zwischen den anderen beiden Drähten und/Stäben vorgesehen sein. Während die anderen beiden Drähte und/oder Stäbe, zum Beispiel ein erster Draht oder Stab und ein dritter Draht oder Stab Teil eines Draht- und/oder Stabgitters sind, kann ein zweiter Draht oder Stab lediglich dazu dienen, die Verbindung zwischen dem ersten Draht oder Stab und dem dritten Draht oder Stab herzustellen.

Der zweite Draht oder Stab kann dazu in eine Fuge zwischen dem ersten Stab oder Draht und dem dritten Draht oder Stab eingelegt sein und sowohl mit dem ersten Draht oder Stab als auch mit dem zweiten Draht oder Stab durch Schweißen verbunden sein. Der zweite Draht oder Stab kann durch das Schweißen teilweise oder vollständig aufgeschmolzen und mit einem aufgeschmolzenen Bereich des ersten Drahtes oder Stabs und/oder mit einem aufgeschmolzenen Bereich des dritten Drahtes oder Stabs eine Schmelze bilden, die zu einer Schweißnaht erkaltet. Die Form des dritten Stabs kann also durch das Schweißen aufgelöst werden.

Der zweite Draht oder Stab kann aber auch zumindest eine Anlagefläche haben, an die der vorzugsweise im Querschnitt kreisförmige erste Draht oder Stab und/oder der vorzugsweise im Querschnitt kreisförmige dritte Draht oder Stab anliegen bzw. angeschweißt sind. Die Anlagefläche des zweiten Stabs ist dann vorzugweise komplementär zu der Anlagefläche des ersten bzw. dritten Drahtes oder Stabs.

Die Schweißnaht oder die Schweißnähte einer erfindungsgemäßen Anordnung springen vorzugsweise in einer Blickrichtung senkrecht zur Längsrichtung der ersten Abschnitte der Drähte oder Stäbe hinter der äußeren Kontur eines Schattenrisses der Drahtanordnung zurück, liegen also vertieft in der Anordnung.

Gemäß der Erfindung können der erste Stab, der zweite Stab und/oder der dritte Stab ein Hohlprofil sein.

Weitere Merkmale und Vorteile der Erfindung und bevorzugter Ausführungsbeispiele werden anhand der Figuren nachfolgend erläutert. Es zeigt:
- Fig. 1: einen Querschnitt einer Drahtanordnung vor dem Schweißen, wie sie aus dem Stand der Technik bekannt ist,
- Fig. 2: einen Querschnitt eines ersten Ausführungsbeispiels mit zwei Drähten vor dem Schweißen,
- Fig. 3: einen Querschnitt eines zweiten Ausführungsbeispiels mit zwei Drähten vor dem Schweißen,
- Fig. 4: einen Querschnitt eines dritten Ausführungsbeispiels mit vier Drähten vor dem Schweißen,
- Fig. 5: einen Querschnitt eines vierten Ausführungsbeispiels mit einem Draht und einem Hohlprofilstab vor dem Schweißen,
- Fig. 6: einen Querschnitt eines fünften Ausführungsbeispiels mit zwei Hohlprofilstäben vor dem Schweißen und
- Fig. 7: einen Querschnitt eines sechsten Ausführungsbeispiels mit drei Drähten vor dem Schweißen.

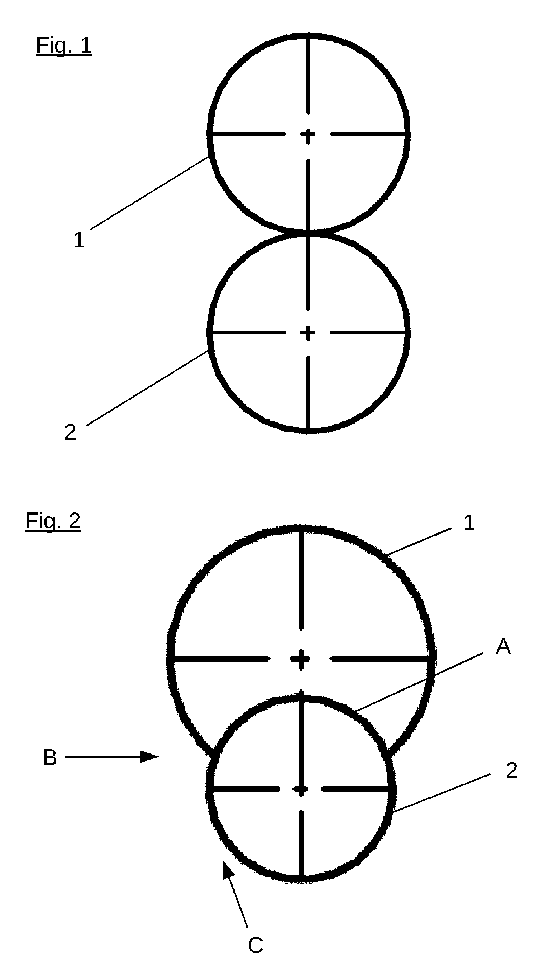

Figur 1 zeigt den Ausgangspunkt für die Erfindung. Dargestellt sind zwei Drähte 1, 2 im Querschnitt, die sich linienförmig berühren. Diese Drähte 1, 2 wurden bisher durch Widerstandspressschweißen an Stellen aneinander geschweißt, die einen Abstand voneinander haben. Durch die auf die Drähte 1, 2 an den Schweißpunkten wirkenden Kräfte kommt es zu einem Nachsetzen und in der Folge zu einer Verformung der Drähte 1, 2, die nach dem Schweißen nicht mehr geradlinig sondern wellenartig geformt sind.

Erfindungsgemäß werden die zwei Drähte 1, 2 nun nicht an einzelnen Punkten aneinander geschweißt, sondern entlang des gesamten ersten Abschnitts, indem die Drähte 1, 2 parallel zu einander sind. Dadurch kann ein punktuelles Nachsetzen verhindert werden.

Vorzugsweise werden die Drähte mit einem Schmelz-Verbindungsschweißverfahren ohne Kraft oder Druck auf einen der Drähte geschweißt. Dazu kommen insbesondere das Schweißen durch elektrische Gasentladung (Lichtbodenschmelzschweißen), Schweißen durch Strahl (Strahlschweißen) oder Schweißen durch elektrischen Strom (Widerstandsschmelzschweißen) in Frage.

Die Figur 2 zeigt zwei Drähte 1, 2 im Querschnitt. Der erste Draht 1 ist im Querschnitt im Wesentlichen kreisförmig, hat aber auf einer Seite eine Rille, die im Querschnitt eine Kreisbogenform hat. Diese Rille formt eine Anlagefläche A des ersten Drahtes. Die Krümmung der Kreisbogenform ist so gewählt, dass der zweite Draht 2, der im Querschnitt kreisförmig ist, formschlüssig in die Rille passt. Dadurch überlappen die Drähte 1, 2 in der Richtung des Pfeils B. Die Richtung des Pfeils B könnte ein Strahl bei einem Strahlschweißverfahren haben.

Bei einem alternativen, nicht dargestellten Ausführungsbeispiel kann die Rille im ersten Draht 1 auch einen keilförmigen oder dreieckigen Querschnitt haben, in die dann der zweite Draht 2 eingesetzt ist. Der zweiten Draht 2 kann dann einen kreisförmigen Querschnitt haben, muss es aber nicht. Der erste Draht 1 und der zweite Draht 2 überlappen in einer Blickrichtung senkrecht auf die Drähte 1, 2.

Der Vorteil einer solchen Überlappung wird deutlich, wenn man zunächst nochmals die Anordnung gemäß Fig. 1 betrachtet. Bei der Anordnung gemäß Fig. 1 berühren sich die Drähte 1, 2 im Idealfall linienförmig. Aufgrund von Krümmungen in den Drähten ergeben sich in der Realität aber Spalte zwischen den Drähten. Diese Spalte führen dazu, dass zum Beispiel Strahlschweißverfahren nicht ohne weiteres verwendet werden können, um die Drähte 1, 2 miteinander zu verbinden, da der Strahl, statt auf Material der Drähte 1, 2 zu treffen, das geschmolzen werden kann, möglicherweise durch den Spalt hindurchtritt, ohne auf Material der Drähte 1, 2 zu treffen. Um einen solchen Spalt zu schließen, müssten die Drähte aneinander gedrückt werden, was aber möglicherweise ein punktuelles oder bereichsweises Nachsetzen zur Folgen haben könnte, was es zu verhindern gilt.

Der Vorteil der Überlappung somit besteht darin, dass bei der Benutzung eines Strahlschweißverfahrens, wie zum Beispiel des Laserstrahlscheißens, der Strahl in jedem Fall auf eine Zone von Material trifft, das zum Schweißen geschmolzen werden kann.

Beim Schweißen der Drähte 1, 2 ergibt es sich, dass eine Schweißnaht in einer Blickrichtung C senkrecht zur Längsrichtung der ersten Abschnitte der Drähte 1, 2 hinter der äußeren Kontur eines Schattenrisses der Drahtanordnung zurückspringt.

Bei dem Ausführungsbeispiel gemäß der Figur 2 sind zwei gleiche Drähte 1, 2 mit Anlageflächen A aneinander gelegt. Die Drähte 1, 2 haben einen im Wesentlichen kreisförmigen Querschnitt, sind jedoch an je einer Seite abgeflacht. Diese Seiten der Drähte 1, 2 bilden die Anlageflächen. Werden die Drähte 1, 2 mit einer Strahlrichtung B aneinandergeschweißt, ergibt es sich, das auch bei geringen Krümmungen der Drähte der Strahl auf ausreichend Material trifft, das geschmolzen werden kann, um die Schweißnaht herzustellen. Die Schweißnaht springt in einer Blickrichtung C senkrecht zur Längsrichtung der ersten Abschnitte der Drähte 1, 2 hinter der äußeren Kontur eines Schattenrisses der Drahtanordnung zurück.

Ausreichendes Material zum Schmelzen kann aber auch dadurch bereitgestellt werden, dass der zweite Draht 2 und ein vierter Draht 4 als Materialvorrat dienen, der aufgeschmolzen werden kann, um den ersten Draht 1 und einen dritten Draht 3 miteinander zu verbinden.

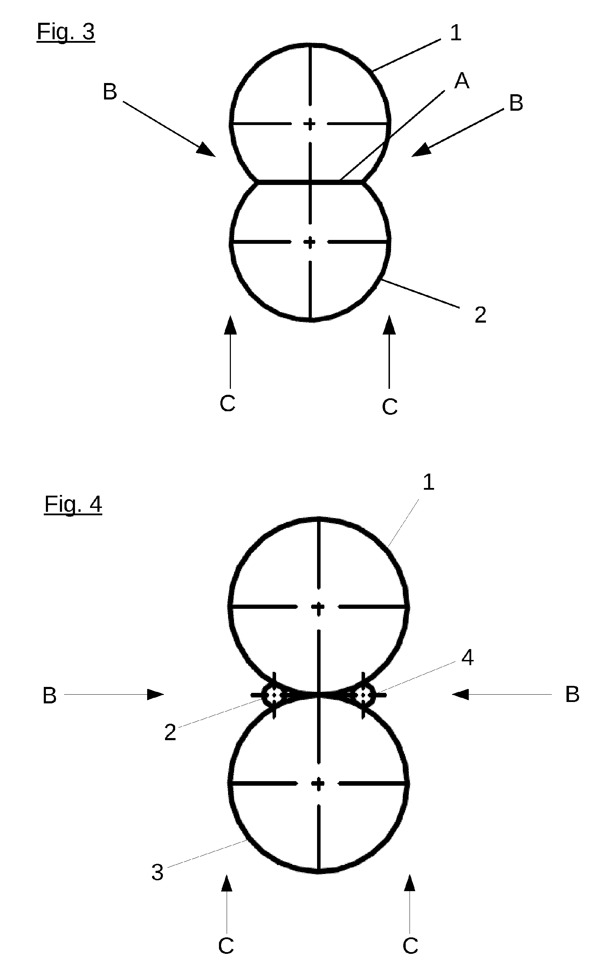

Eine solche Anordnung ist in der Fig. 4 dargestellt. Bei kleinen Spalten zwischen dem ersten, im Querschnitt kreisförmigen Draht 1 und dem zweiten, im Querschnitt ebenfalls kreisförmigen Draht 3 kann dieser Spalt durch den zweiten Draht 2 und den vierten Draht 4 überbrückt werden, so dass bei einem Schweißen mit Strahlen in die Richtung B die Drähte 2, 4 und angrenzendes Material der Drähte 1, 3 aufgeschmolzen werden können, um eine feste Verbindung zwischen den Drähten 1, 3 herzustellen. Die Schweißnähte springen dann in einer Blickrichtung C senkrecht zur Längsrichtung der ersten Abschnitte der Drähte 1, 2 hinter der äußeren Kontur eines Schattenrisses der Drahtanordnung zurück. Es ist möglich, dass der vierte Draht 4 entfällt.

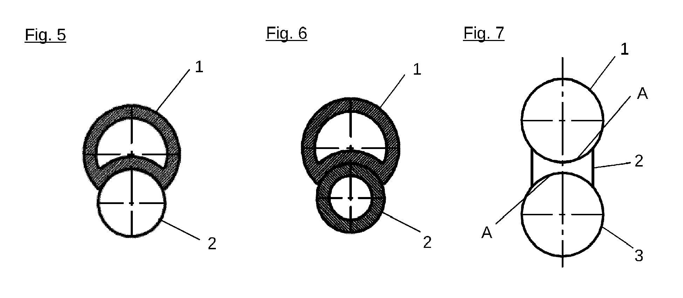

Die Ausführungsbeispiele gemäß den Figuren 5 und 6 ähneln dem Beispiel aus der Fig. 2. Im Unterschied zu dem Beispiel aus Fig. 2 ist beim Beispiel gemäß Fig. 5 der mit der Rille versehene Draht 1 durch einen Hohlprofilstab 1 mit einem gleichen äußeren Querschnitt ersetzt. Beim Beispiel gemäß der Fig. 6 sind beide Drähte 1, 2 durch Hohlprofilstäbe 1, 2 mit gleichem äußeren Querschnitt ersetzt.

Bei dem Beispiel gemäß Fig. 7 sind zwei im Querschnitt kreisförmige Drähte 1, 3 vorgesehen, die an einen zweiten Draht 2 angelegt sind. Dieser zweite Draht hat an zwei Seiten Anlegeflächen A, die einwärts gekrümmt sind, wobei der Krümmungsradius dem Radius der Drähte 1, 3 entspricht, so dass die Drähte 1, 3 formschlüssig an die Anlageflächen A des zweiten Drahtes 2 angelegt werden können.

## Patentansprüche

1. Draht- und/oder Stabanordnung mit zumindest einem ersten Draht oder Stab (1) mit einem ersten Abschnitt und einem zweiten Draht oder Stab (2) mit einem ersten Abschnitt, wobei die ersten Abschnitte parallel zueinander liegen und durch Schweißen miteinander verbunden sind,
**dadurch gekennzeichnet, dass**
die ersten Abschnitte des ersten Drahtes oder Stabes (1) und des zweiten Drahtes oder Stabes (2) über die gesamte Länge der ersten Abschnitte über zumindest eine Schweißnaht mit einander verbunden sind, die sich über die gesamte Länge der ersten Abschnitte oder über einen Teil der ersten Abschnitte erstreckt.

2. Anordnung nach Anspruch 1, **dadurch gekennzeichnet, dass** der erste Draht oder Stab (1) und der zweite Draht oder Stab (2) vor dem Schweißen Anlageflächen (A) haben, mit denen sie flächig aneinander liegen.

3. Anordnung nach Anspruch 2, **dadurch gekennzeichnet, dass** die Anlageflächen (A) eben sind.

4. Anordnung nach Anspruch 2, **dadurch gekennzeichnet, dass** eine der Anlageflächen (A) des ersten Drahtes oder Stabes (1) oder des zweiten Drahtes oder Stabes (2) nach innen gekrümmt ist während die andere nach außen gekrümmt ist.

5. Anordnung nach Anspruch 4, **dadurch gekennzeichnet, dass** die Krümmungen der Anlageflächen (A) komplementär zueinander sind.

6. Anordnung nach einem der Ansprüche 1 bis 5, **dadurch gekennzeichnet, dass** die Anordnung einen dritten Draht oder Stab (3) mit einem ersten Abschnitt aufweist, wobei der erste Abschnitt des dritten Drahtes oder Stabes (3) parallel zu dem ersten Abschnitt des ersten Drahtes oder Stabes (1) und dem ersten Abschnitt des zweiten Drahtes oder Stabes (2) liegt und der erste Abschnitt des dritten Drahtes oder Stabes (3) sowohl mit dem ersten Abschnitt des ersten Drahtes oder Stabes (1) als auch mit dem ersten Abschnitt des zweiten Drahtes oder Stabes (2) mit einer Schweißnaht verbunden ist, die sich über die gesamte Länge der ersten Abschnitte erstreckt.

7. Anordnung nach einem der Ansprüche 1 bis 5, **dadurch gekennzeichnet, dass** die Anordnung einen dritten Draht oder Stab (3) mit einem ersten Abschnitt aufweist, wobei der erste Abschnitt des dritten Drahtes oder Stabes (3) parallel zu dem ersten Abschnitt des ersten Drahtes oder Stabes (1) und dem ersten Abschnitt des zweiten Drahtes oder Stabes (2) liegt und der erste Abschnitt des dritten Drahtes oder Stabes (3) mit dem ersten Abschnitt des zweiten Drahtes oder Stabes (2) mit einer Schweißnaht verbunden ist, die sich über die gesamte Länge der ersten Abschnitte erstreckt.

8. Anordnung nach Anspruch 7, **dadurch gekennzeichnet, dass** der zweite Draht oder Stab (2) und der dritte Draht oder Stab (3) vor dem Schweißen Anlageflächen (A) haben, mit denen sie flächig aneinander liegen.

9. Anordnung nach Anspruch 8, **dadurch gekennzeichnet, dass** von den Anlagefläche (A) des zweiten Drahtes oder Stabes (2) oder des dritten Drahtes oder Stabes (3) eine nach innen gekrümmt ist während die andere nach außen gekrümmt ist.

10. Anordnung nach Anspruch 9, **dadurch gekennzeichnet, dass** die Krümmungen der Anlageflächen (A) komplementär zueinander sind.

11. Anordnung nach einem der Ansprüche 1 bis 10, **dadurch gekennzeichnet, dass** die Schweißnaht oder die Schweißnähte der Anordnung in einer Blickrichtung senkrecht zur Längsrichtung der ersten Abschnitte der Drähte oder Stäbe (1, 2, 3) hinter der äußeren Kontur eines Schattenrisses der Drahtanordnung zurückspringen.

12. Anordnung nach einem der Ansprüche 1 bis 11, **dadurch gekennzeichnet, dass** der ersten Abschnitte der Drähte (1, 2, 3, 4) und Stäbe sich in einer Richtung (B) senkrecht zu den Drähten (1, 2, 3, 4) oder Stäben überlappen.

13. Draht- und/oder Stabgitteranordnung mit wenigstens einem ersten Gitter aus Drähten und/oder Stäben, **dadurch gekennzeichnet, dass** einer der Stäbe des ersten Gitters, insbesondere an einem Rand des ersten Gitters, Teil einer Anordnung nach einem der Ansprüche 1 bis 12 ist.

14. Gitteranordnung nach Anspruch 13, **dadurch gekennzeichnet, dass** die Gitteranordnung ein zweites Gitter aus Drähten und/oder Stäben aufweist, wobei einer der Stäbe des zweiten Gitters, insbesondere an einem Rand des zweiten Gitters Teil der Anordnung ist.

15. Verfahren zum Verbinden zweier Drähte oder Stäbe durch Schweißen, wobei zumindest ein erster Draht oder Stab (1) mit einem ersten Abschnitt und ein zweiter Draht oder Stab (2) mit einem ersten Abschnitt so angeordnet werden, dass die ersten Abschnitte parallel zueinander liegen,
**dadurch gekennzeichnet,**
**dass** die ersten Abschnitte des ersten Drahtes oder Stabes (1) und des zweiten Drahtes oder Stabes (2) über die gesamte Länge der ersten Abschnitte über zumindest eine Schweißnaht mit einander verbunden werden, die sich über die gesamte Länge der ersten Abschnitte erstreckt oder
**dass** die ersten Abschnitte des ersten Drahtes oder Stabes (1) und des zweiten Drahtes oder Stabes (2) an Punkten oder Teilabschnitten der ersten Abschnitte durch ein Schmelzschweißverfahren ohne äußere Krafteinwirkung zum Zusammenpressen der ersten Abschnitte über zumindest eine Schweißnaht mit einander verbunden werden.
